Europäisches Patentamt

European Patent Office

Office européen des brevets

(19)

(11) **EP 0 839 164 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(21) Anmeldenummer: **96925665.0**

(22) Anmeldetag: **05.07.1996**

(51) Int Cl.[6]: **C08L 23/04**

(86) Internationale Anmeldenummer:
**PCT/EP96/02958**

(87) Internationale Veröffentlichungsnummer:
**WO 97/04025 (06.02.1997 Gazette 1997/07)**

(54) **POLYETHYLENFORMMASSEN GERINGER SCHWINDUNGSNEIGUNG**

LOW-SHRINKAGE POLYETHYLENE MOULDING COMPOUNDS

MATIERE A MOULER A BASE DE POLYETHYLENE A FAIBLE TENDANCE AU RETRAIT

(84) Benannte Vertragsstaaten:
**AT BE CH DE DK ES FR GB IE IT LI NL SE**

(30) Priorität: **19.07.1995 DE 19526340**

(43) Veröffentlichungstag der Anmeldung:
**06.05.1998 Patentblatt 1998/19**

(73) Patentinhaber: **BASF AKTIENGESELLSCHAFT
67056 Ludwigshafen (DE)**

(72) Erfinder:
• **NEUMANN, Petra
  D-67459 Böhl-Iggelheim (DE)**
• **WEBER, Siegfried
  D-69469 Weinheim (DE)**
• **LILGE, Dieter
  D-67117 Limburgerhof (DE)**
• **GÖRTZ, Hans-Helmut
  D-67251 Freinsheim (DE)**

(56) Entgegenhaltungen:
**EP-A- 0 019 765          EP-A- 0 533 155
US-A- 3 976 612          US-A- 3 998 914
US-A- 5 082 902          US-A- 5 358 994**

**Beschreibung**

Die vorliegende Erfindung betrifft Formmassen auf der Basis von Polymerisaten des Ethylens aus

(A) 40 bis 65 Gew.-% eines Ethylenpolymerisats mit einer Dichte im Bereich von 0,948 bis 0,964 g/cm$^3$, einem Schmelzflußindex (MFI) von 6 bis 20 g/10 min und einer mittleren Molmassenverteilung $\overline{M}_w/\overline{M}_n$ im Bereich von 2 bis 5,

(B) 35 bis 60 Gew.-% eines Ethylenpolymerisats mit einer Dichte im Bereich von 0,935 bis 0,953 g/cm$^3$, einem Schmelzflußindex (MFI) von 0,1 bis 0,35 g/10 min und einer mittleren Molmassenverteilung $\overline{M}_w/\overline{M}_n$ im Bereich von 6 bis 20,

(C) 0 bis 6 Gew.-% der üblichen Thermoplast-Additiva,

wobei die Dichte der Formmassen im Bereich von 0,948 bis 0,9.57 g/cm$^3$, der Schmelzflußindex im Bereich von 1,0 bis 2,0 g/10 min, die mittlere Molmassenverteilung $\overline{M}_w/\overline{M}_n$ im Bereich von 3 bis 10 und die Differenz der Dichten der Komponenten A und B ($\Delta D = D_{(A)}\text{-}D_{(B)}$) im Bereich von 0 bis 0,029 g/cm$^3$ liegt.

Weiterhin betrifft die vorliegende Erfindung ein Verfahren zur Herstellung dieser Formmassen durch Schmelzeextrusion, die Verwendung der Formmassen zur Herstellung von Folien, Fasern und Formkörpern, Folien, Fasern und Formkörper aus diesen Formmassen sowie Schraubverschlüsse aus den Formmassen.

Mischungen auf der Basis von Ethylenpolymeren, im folgenden Polyethylenblends genannt, sind bekannt und werden beispielsweise, wie in der DE-C 34 37 116 beschrieben, zur Herstellung von spannungsrißbeständigen Formkörpern verwendet.

In jüngerer Zeit werden Polyethylenblends zur Herstellung von Schraubverschlüssen aller Art durch Kunststoffspritzguß verwendet. Es ist vorteilhaft, wenn die Schraubverschlüsse nach dem Spritzgußvorgang, also beim Erkalten, ihre Dimensionen und Form behalten, also nicht schrumpfen (geringe Schwindung). Der Spritzgußvorgang wird im allgemeinen erleichtert, wenn die Polyethylenformmassen in der Schmelze leicht fließen (gute Fließfähigkeit). Geringe Schwindung und Formstabilität ist eine wichtige Eigenschaft von Kunststoffen, aus denen beispielsweise paßgenaue Schraubverschlüsse hergestellt werden sollen.

Die bekannten Formmassen lassen bezüglich des kombinierten Eigenschaftsprofils Dimensions- und Formstabilität (Schwindungsverhalten) einerseits und gute Fließfähigkeit andererseits noch zu wünschen übrig.

Der Erfindung lag daher die Aufgabe zugrunde, diesen Mängeln abzuhelfen und besonders Polyethylenformmassen zur Verfügung zu stellen, die eine gute Fließfähigkeit bei gleichzeitig guter Dimensions- und Formstabilität (geringe Schwindung) aufweisen.

Demgemäß wurden die eingangs definierten Formmassen, ein Verfahren zur Herstellung dieser Formmassen, deren Verwendung zur Herstellung von Folien, Fasern und Formkörpern, Folien, Fasern und Formkörper aus diesen Formmassen sowie Schraubverschlüsse aus den Formmassen gefunden.

Die erfindungsgemäßen Formmassen enthalten als Komponente (A) 40 bis 65 Gew.-%, vorzugsweise 55 bis 60 Gew.-%, bezogen auf die Ethylenpolymerisate, eines Ethylenpolymerisats der Dichte gemessen nach DIN 53 479 von 0,948 bis 0,964 g/cm$^3$, vorzugsweise von 0,959 bis 0,964 g/cm$^3$, des Schmelzflußindex gemessen nach DIN 53 735 bei 190°C und 2,16 kg Auflagegewicht von 6 bis 20 g/10 min, vorzugsweise von 6 bis 10 g/10 min und der mittleren Molmassenverteilung $\overline{M}_w/\overline{M}_n$, gemessen mit der Methode der GPC bei 135°C in 1,2,4-Trichlorbenzol (Polyethylenstandard), im Bereich von 2 bis 5, insbesondere 3 bis 4.

Die Komponente (A) wird üblicherweise erhalten durch die Polymerisation von Ethylen oder die Copolymerisation von Ethylen mit C$_3$-bis C$_{12}$-Alk-1-enen in Gegenwart von dem Fachmann beispielsweise aus DE-A 34 33 468, insbesondere Beispiel 1, bekannten Ziegler-Katalysatoren. Die Ethylen-Alk-1-en-Copolymerisate enthalten bis zu 1 Gew.-%, vorzugsweise bis zu 0,5 Gew.-% vom Alk-1-en abgeleitete Struktureinheiten. Vorzugsweise verwendet man ein oder mehrere Comonomere aus der Gruppe der C$_3$- bis C$_8$-, Alk-1-ene, z.B. Propen, 1-Buten, 1-Penten, 1-Hexen, 1-Octen.

Die erfindungsgemäßen Formmassen enthalten als Komponente (B) 35 bis 60 Gew.-%, vorzugsweise 40 bis 45 Gew.-%, bezogen auf die Ethylenpolymerisate, eines Ethylenpolymerisats der Dichte, gemessen nach DIN 53 479, von 0,935 bis 0,953 g/cm$^3$, vorzugsweise von 0,935 bis 0,941 g/cm$^3$, des Schmelzflußindex, gemessen nach DIN 53 735 bei 190°C und 2,16 kg Auflagegewicht, von 0,1 bis 0,35 g/10 min, vorzugsweise von 0,1 bis 0,2 g/10 min und der mittleren Molmassenverteilung $\overline{M}_w/\overline{M}_n$, gemessen mit der Methode der GPC bei 135°C in 1,2,4-Trichlorbenzol (Polyethylenstandard), im Bereich von 6 bis 20, insbesondere 8 bis 15.

Die Komponente (B) wird im allgemeinen erhalten durch die Polymerisation von Ethylen oder die Copolymerisation von Ethylen mit C$_3$-bis C$_{12}$-Alk-1-enen in Gegenwart von dem Fachmann, beispielsweise aus DE-A 25 40 279, insbesondere Beispiel, bekannten Phillips-Katalysatoren.

Die Ethylen/Alk-1-en-Copolymerisate als Komponente (B) enthalten im allgemeinen 0,5 bis 3 Gew.-%, vorzugsweise 0,5 bis 2 Gew.-% vom Alk-1-en abgeleitete Struktureinheiten. Vorzugsweise verwendet man ein oder mehrere Comonomere aus der Gruppe der $C_3$- bis $C_8$-Alk-1-ene wie z.B. Propen, 1-Buten,1-Penten, 1-Hexen, 1-Octen.

Weiterhin können die erfindungsgemäßen Formmassen noch 0 bis 6 Gew.-%, vorzugsweise 0,1 bis 1 Gew.-%, bezogen auf die Masse der Ethylenpolymerisate, der üblichen Additive für Thermoplaste enthalten. Darunter versteht man u.a. Gleitmittel (Ca-Stearat); übliche Stabilisatoren, beispielsweise Phenole, Phosphite, Benzophenon, Benzotriazole oder Thioether; Füllstoffe, beispielsweise $TiO_2$, Kreide oder Ruß; übliche Pigmente, beispielsweise $TiO_2$, Ultramarinblau.

Die Dichte der erfindungsgemäßen Formmassen gemessen nach DIN 53 479 liegt im Bereich von 0,948 bis 0,957 g/cm$^3$, vorzugsweise im Bereich von 0,948 bis 0,954 g/cm$^3$.

Der Schmelzflußindex der erfindungsgemäßen Formmassen gemessen nach DIN 53 735 bei 190°C und 2,16 kg Auflagegewicht liegt im Bereich von 1,0 bis 2,0 g/10 min.

Die mittlere Molmassenverteilung $\overline{M}_w/\overline{M}_n$ der erfindungsgemäßen Formmassen, bestimmt mit der Gelpermeationschromatographie (GPC) in 1,2,4-Trichlorbenzol bei 135°C gegen Polyethylenstandard, liegt im Bereich von 3 bis 10, vorzugsweise von 4 bis 8.

Die Differenz der Dichten ($\Delta$D) der Komponenten (A) und (B) ($\Delta$D = D$_{(A)}$-D$_{(B)}$) zur Herstellung der erfindungsgemäßen Formmassen liegt im Bereich von 0 bis 0,029 g/cm$^3$, vorzugsweise im Bereich von 0 bis 0,024 g/cm$^3$.

Die Herstellung der erfindungsgemäßen Formmassen aus den Bestandteilen (A), (B) und gegebenenfalls (C) geschieht durch Mischen dieser Bestandteile mit den in der Kunststofftechnik üblichen Verfahren wie beispielsweise Schmelzeextrusion, Walzen, Kompaktieren oder Lösungsmischen. Vorzugsweise verwendet man die Schmelzeextrusion beispielsweise in einem Doppelschneckenextruder. Im allgemeinen liegen die Extrusionstemperaturen im Bereich von 140 bis 250°C.

Die Reihenfolge der Zugabe der Komponenten ist im allgemeinen nicht kritisch. So können alle Komponenten (A), (B) und gegebenenfalls (C), fertig gemischt in das Mischwerkzeug gegeben werden, oder getrennt voneinander oder es können zwei Komponenten fertig gemischt und die gegebenenfalls dritte separat in das Mischwerkzeug gegeben werden.

Die Fließeigenschaften der erfindungsgemäßen Polyethylenformmassen wurden mit dem Spritzgießtest (Spiraltest) bestimmt. Hierbei wird der Füllgrad einer als Spirale ausgelegten Spritzgießform mit den entsprechenden Ethylenpolymerisaten gemessen (Prüfanweisungen 10 und 10.1, BASF Aktiengesellschaft: Verarbeitungstemperatur 270°C, Zykluszeit 30 s, Spirallänge in cm).

Die Dimensions- und Formstabilität der erfindungsgemäßen Polyethylen-Formmassen wurde analog der BASF-Prüfmethode Nr. 12 gemessen. Hierzu wurden in einer Spritzgußmaschine mit Gewindewerkzeug (Gewindedurchmesser 28,2 mm) bei 180 bis 270°C Kunststoffverschlüsse hergestellt, erkalten lassen, der Gewindeaußendurchmesser von 50 Prüfkörpern gemessen, der Mittelwert in mm gebildet, die Abweichung vom Gewindewerkzeugdurchmesser bestimmt und die Prüfkörper visuell auf Dimensions- und Formstabilität begutachtet.

Die erfindungsgemäßen Polyethylenformmassen zeichnen sich durch gute Fließeigenschaften (Spirallänge größer als 20 cm) bei gleichzeitig guter Dimensions- und Formstabilität (geringe Schwindung) aus. Sie lassen sich besonders vorteilhaft zu Schraubverschlüssen, für beispielsweise Getränkeflaschen, weiterverarbeiten.

Beispiele 1 bis 5

Aus den wie folgt spezifizierten Ethylenpolymeren (A) (Ethylenhomopolymer) und (B) (Ethylen/1-Hexen-Copolymer, 1"Hexen-Gehalt 2,5 Gew.-%) und 0,3 Gew.-% Ca-Stearat und Irganox® 1076, bezogen auf die Masse der Ethylenpolymerisate als Stabilisator wurden mit einem Doppelschneckenextruder (Werner & Pfleiderer ZSK 53) unter den folgenden Extrusionsbedingungen Polymerblends hergestellt, ihre Eigenschaften bestimmt (siehe Tabelle 1) bzw. sie wurden zu Verschlüssen spritzgegossen.

| Extrusionsbedingungen: | |
| --- | --- |
| Durchsatz Polymer | 50 kg/h |
| Drehzahl | 120/min |
| Schmelzetemperatur | 200°C |

| Ethylenhomopolymer (A): | |
| --- | --- |
| Katalysator | Ziegler (DE-A 34 33 468, Beispiel 1) |
| MFI [g/10 min] (190°C/2,16kg) | 8,2 |

(fortgesetzt)

| Ethylenhomopolymer (A): | |
|---|---|
| Dichte [g/cm$^3$] | 0,9615 |
| $\overline{M}_w$[1] | 80.000 |
| $\overline{M}_w/\overline{M}_n$[1] | 4 |

[1] Bestimmt mit der Gelpermeationschromatographie (1,2,4-Trichlorbenzol, 135°C, PE-Standard)

| Ethylen/1-Hexen Copolymer (B): | |
|---|---|
| Katalysator | Phillips (DE-A 25 40 279, Beispiel) |
| MFI [g/10 min] (190°C/2,16 kg) | 0,15 |
| Dichte [g/cm$^3$] | 0,9372 |
| $\overline{M}_w$[1] | 200.000 |
| $\overline{M}_w/\overline{M}_n$[1] | 9 |

[1] Bestimmt mit der Gelpermeationschromatographie (1,2,4-Trichlorbenzol, 135°C, PE-Standard)

Tabelle 1

| Polyethylenformmassen aus den Komponenten (A) und (B) und ihre Eigenschaften | | | | | |
|---|---|---|---|---|---|
| Beispiel | Mischung 1 | Mischung 2 | Mischung 3 | Mischung 4 | Mischung 5 |
| Verhältnis[1] (B) : (A) | 40/60 | 42,5/57,5 | 45/55 | 47,5/52,5 | 50/50 |
| MFI (g/10) (190°C/2,16 kg) | 1,79 | 1,56 | 1,52 | 1,37 | 1,23 |
| Dichte (g/cm$^3$) | 0,9520 | 0,9515 | 0,9518 | 0,9512 | 0,9502 |
| Spirallänge, 270°C (cm) | 28,9 | 29,1 | 28,8 | 28,6 | 29,7 |
| Gewindedurchmesser (mm) Mittelwert: min max | 28,19 28,18 28,20 | 28,20 28,19 28,23 | 28,24 28,23 28,25 | 28,18 28,18 28,19 | 28,25 28,23 28,26 |
| $\overline{M}_w$ | - | 139 | - | - | 141 |
| $\overline{M}_n$ | - | 25 | - | - | 21 |
| $\overline{M}_w/\overline{M}_n$ | | 6 | | | 7 |

[1] In Gew.-% bezogen auf die Ethylenpolymerisate

**Patentansprüche**

1. Formmassen auf der Basis von Polymerisaten des Ethylens aus

(A) 40 bis 65 Gew.-% eines Ethylenpolymerisats mit einer Dichte im Bereich von 0,948 bis 0,964 g/cm$^3$, einem Schmelzflußindex (MFI) von 6 bis 20 g/10 min und einer mittleren Molmassenverteilung $\overline{M}_w/\overline{M}_n$ im Bereich von 2 bis 5,

(B) 35 bis 60 Gew.-% eines Ethylenpolymerisats mit einer Dichte im Bereich von 0,935 bis 0,953 g/cm$^3$, einem Schmelzflußindex (MFI) von 0,1 bis 0,35 g/10 min und einer mittleren Molmassenverteilung $\overline{M}_w/\overline{M}_n$ im Bereich von 6 bis 20,

(C) 0 bis 6 Gew.-% der üblichen Thermoplast-Additiva,

wobei die Dichte der Formmassen im Bereich von 0,948 bis 0,957 g/cm$^3$, der Schmelzflußindex im Bereich von 1,0 bis 2,0 g/10 min, die mittlere Molmassenverteilung $\overline{M}_w/\overline{M}_n$ im Bereich von 3 bis 10 und die Differenz der Dichten der Komponenten (A) und (B) ($\Delta D = D_{(A)} - D_{(B)}$) im Bereich von 0 bis 0,029 g/cm$^3$ liegt.

EP 0 839 164 B1

**2.** Formmassen nach Anspruch 1, in welchen die Komponente (A) zu 55 bis 60 Gew.-% und die Komponente (B) zu 40 bis 45 Gew.-% enthalten ist.

**3.** Formmassen nach Anspruch 1, wobei die Dichte der Komponente (A) im Bereich von 0,959 bis 0,964 g/cm$^3$ und die Dichte der Komponente (B) im Bereich von 0,935 bis 0,941 g/cm$^3$ liegt.

**4.** Formmassen nach den Ansprüchen 1 bis 3, wobei der Schmelzflußindex der Komponente (A) im Bereich von 6 bis 10 g/10 min und der Schmelzflußindex der Komponente (B) im Bereich von 0,1 bis 0,2 g/10 min liegt.

**5.** Formmassen nach den Ansprüchen 1 bis 4, wobei die Komponente (A) ein Ethylen-Alk-1-en-Copolymer ist mit einem Gehalt von chemisch gebundenen Alk-1-en-Einheiten bis zu 1 Gew.-% und die Komponente (B) ein Ethylen-Alk-1-en-Copolymer ist mit einem Gehalt von chemisch gebundenen Alk-1-en-Einheiten im Bereich von 0,5 bis 3 Gew.-% und das Alk-1-en ein C$_3$- bis C$_{12}$-Alk-1-en ist.

**6.** Verfahren zur Herstellung von Formmassen auf der Basis von Polymerisaten des Ethylens gemäß den Ansprüchen 1 bis 5 durch Schmelzeextrusion in Gegenwart von 0 bis 6 Gew.-% der üblichen Thermoplast-Additiva, dadurch gekennzeichnet, daß die Komponente (A) mit einem Ziegler-Katalysator hergestellt wird und die Komponente (B) mit einem Phillips-Katalysator hergestellt wird.

**7.** Verwendung der Formmassen gemäß den Ansprüchen 1 bis 5 zur Herstellung von Fasern, Folien und Formkörpern.

**8.** Verwendung der Formmassen gemäß den Ansprüchen 1 bis 5 zur Herstellung von Schraubverschlüssen.

**9.** Folien, Fasern und Formkörper aus den Formmassen gemäß den Ansprüchen 1 bis 5.

**10.** Schraubverschlüsse aus den Formmassen gemäß den Ansprüchen 1 bis 5.

**Claims**

**1.** A molding composition based on polymers of ethylene made from

(A) from 40 to 65% by weight of an ethylene polymer having a density in the range from 0.948 to 0.964 g/cm$^3$, a melt flow index (MFI) of from 6 to 20 g/10 min and a mean molar mass distribution $\overline{M}_w/\overline{M}_n$ in the range from 2 to 5,

(B) from 35 to 60% by weight of an ethylene polymer having a density in the range from 0.935 to 0.953 g/cm$^3$, a melt flow index (MFI) of from 0.1 to 0.35 g/10 min and a mean molar mass distribution $\overline{M}_w/\overline{M}_n$ in the range from 6 to 20, and

(C) from 0 to 6% by weight of the usual additives for thermoplastics,

where the density of the molding composition is in the range from 0.948 to 0.957 g/cm$^3$, the melt flow index is in the range from 1.0 to 2.0 g/10 min, the mean molar mass distribution $\overline{M}_w/\overline{M}_n$ is in the range from 3 to 10 and the difference of the densities of components (A) and (B) ($\Delta D = D_{(A)} - D_{(B)}$) is in the range from 0 to 0.029 g/cm$^3$.

**2.** A molding composition as claimed in claim 1, in which component (A) is present in a proportion of from 55 to 60% by weight and component (B) is present in a proportion of from 40 to 45% by weight.

**3.** A molding composition as claimed in claim 1, where the density of component (A) is in the range from 0.959 to 0.964 g/cm$^3$ and the density of component (B) is in the range from 0.935 to 0.941 g/cm$^3$.

**4.** A molding composition as claimed in any of claims 1 to 3, where the melt flow index of component (A) is in the range from 6 to 10 g/10 min and the melt flow index of component (B) is in the range from 0.1 to 0.2 g/10 min.

**5.** A molding composition as claimed in any of claims 1 to 4, where component (A) is an ethylene-alk-1-ene copolymer with a content of up to 1% by weight of chemically bonded alk-1-ene units and component (B) is an ethylene-alk-

5

1-ene copolymer having a content in the range from 0.5 to 3% by weight of chemically bonded alk-1-ene units and the alk-1-ene is a $C_3$-$C_{12}$-alk-1-ene.

6. A process for producing molding compositions based on polymers of ethylene as claimed in any of claims 1 to 5 by melt extrusion in the presence of from 0 to 6% by weight of the usual additives for thermoplastics, wherein component (A) is prepared using a Ziegler catalyst and component (B) is prepared using a Phillips catalyst.

7. The use of a molding composition as claimed in any of claims 1 to 5 for producing fibers, films and shaped articles.

8. The use of a molding composition as claimed in any of claims 1 to 5 for producing screw closures.

9. A film, a fiber or a shaped article made from a molding composition as claimed in any of claims 1 to 5.

10. A screw closure made from a molding composition as claimed in any of claims 1 to 5.

**Revendications**

1. Matières à mouler à base de polymères de l'éthylène, qui consistent en

    (A) 40 à 65 % en poids d'un polymère de l'éthylène ayant une densité dans l'intervalle de 0,948 à 0,964 g/cm$^3$, un indice de fluidité à l'état fondu (MFI) de 6 à 20 g/10 minutes et une répartition des masses moléculaires moyenne $\overline{M}_w/\overline{M}_n$ dans l'intervalle de 2 à 5,

    (B) 35 à 60 % en poids d'un polymère de l'éthylène ayant une densité dans l'intervalle de 0,935 à 0,953 g/cm$^3$, un indice de fluidité à l'état fondu (MFI) de 0,1 à 0,35 g/10 minutes et une répartition des masses moléculaires moyennes $\overline{M}_w/\overline{M}_n$ dans l'intervalle de 6 à 20,

    (C) 0 à 6 % en poids d'un additif usuel pour matières thermoplastiques,

    la densité des matières à mouler se situant dans l'intervalle de 0,948 à 0,957 g/cm$^3$, l'indice de fluidité à l'état fondu dans l'intervalle de 1,0 à 2,0 g/10 minutes, la répartition des masses moléculaires moyennes $\overline{M}_w/\overline{M}_n$ dans l'intervalle de 3 à 10 et la différence des densités des composants (A) et (B) ($\Delta D = D_{(A)}-D_{(B)}$) dans l'intervalle de 0 à 0,029 g/cm$^3$.

2. Matières à mouler selon la revendication 1, dans lesquelles le composant (A) est contenu en proportions de 55 à 60 % en poids et le composant (B) en proportions de 40 à 45 % en poids.

3. Matières à mouler selon la revendication 1, dans lesquelles la densité du composant (A) se situe dans l'intervalle de 0,959 à 0,964 g/cm$^3$ et la densité du composant (B) dans l'intervalle de 0,935 à 0,941 g/cm$^3$.

4. Matières à mouler dans les revendications 1 à 3, dans lesquelles l'indice de fluidité à l'état fondu du composant (A) se situe dans l'intervalle de 6 à 10 g/10 minutes et l'indice de fluidité à l'état fondu du composant (A) se situe dans l'intervalle de 6 à 10 g/10 minutes et l'indice de fluidité à l'état fondu du composant (B) dans l'intervalle de 0,1 à 0,2 g/10 minutes.

5. Matières à mouler selon les revendications 1 à 4, dans lesquelles le composant (A) est un copolymère éthylène-alcène-1 contenant des motifs d'alcène-1 chimiquement combinés en proportions allant jusqu'à 1 % en poids et le composant (B) est un copolymère éthylène-alcène-1 contenant des motifs d'alcène-1 combinés chimiquement en proportions de 0,5 à 3 % en poids, l'alcène-1 étant un alcène-1 en C3-C12.

6. Procédé de préparation des matières à mouler à base de polymères de l'éthylène selon les revendications 1 à 5 par extrusion à l'état fondu en présence de 0 à 6 % en poids d'additifs usuels pour matières thermoplastiques, caractérisé par le fait que le composant (A) est préparé à l'aide d'un catalyseur de Ziegler et le composant (B) à l'aide d'un catalyseur de Phillips.

7. Utilisation des matières à mouler selon les revendications 1 à 5 pour la fabrication de fibres, de feuilles et de corps moulés.

**8.** Utilisation des matières à mouler selon les revendications 1 à 5, pour la fabrication de bouchons filetés.

**9.** Feuilles, fibres et corps moulés consistant en les matières à mouler selon les revendications 1 à 5.

**10.** Bouchons filetés consistant en les matières à mouler selon les revendications 1 à 5.